Europäisches Patentamt

European Patent Office

Office européen des brevets

(11) Veröffentlichungsnummer: **0 377 145**
**A2**

## (12) EUROPÄISCHE PATENTANMELDUNG

(21) Anmeldenummer: 89123017.9

(22) Anmeldetag: 13.12.89

(51) Int. Cl.5: **B23Q 1/26, B23Q 5/56**

(30) Priorität: 04.01.89 DE 3900121

(43) Veröffentlichungstag der Anmeldung:
**11.07.90 Patentblatt 90/28**

(84) Benannte Vertragsstaaten:
**AT BE CH DE ES FR GB IT LI NL**

(71) Anmelder: **INSTITUT FÜR PRODUKTIONSTECHNIK KARLSRUHE GMBH**
**Neuenbürger Strasse 22**
**D-7500 Karlsruhe 41(DE)**

(72) Erfinder: **Golz,Hans Ulrich,Dipl.-Ing.**
**Ringstrasse 27**
**D-6701 Otterstadt(DE)**
Erfinder: **Mathes,Friedbert**
**Bruchsaler Strasse 18**
**D-7529 Forst(DE)**

(74) Vertreter: **Lemcke, Rupert, Dipl.-Ing. et al**
**Patentanwälte Dipl.-Ing. R. Lemcke Dr.-Ing. H.J. Brommer Bismarckstrasse 16 Postfach 4026**
**D-7500 Karlsruhe 1(DE)**

(54) Vorrichtung zur Einstellung der axialen Vorspannung von Wälzlagern und Spindelmuttern.

(57) Es wird eine Vorrichtung zur Einstellung der Axialkomponente für die Spielfreie Vorspannung von Wälzlagern und Spindelmuttern angegeben, wobei die Vorrichtung ein im Kraftfluß der Axialabstützung angeordnetes, hinsichtlich seiner Stellgröße variables Spannelement enthält, Das Spannelement ist dabei ein aus scheibenförmigen Piezoelementen zusammengesetztes Paket.

EP 0 377 145 A2

## Vorrichtung zur Einstellung der axialen Vorspannung von Wälzlagern und Spindelmuttern

Die Erfindung betrifft eine Vorrichtung zur Einstellung der Axialkomponente für die spielfreie Vorspannung von Wälzlagern oder Spindelmuttern, wobei die Vorrichtung ein in Kraftfluß der Axialabstützung angeordnetes, hinsichtlich seiner Stellgröße variables Spannelement enthält.

Bei Maschinen aller Art, insbesondere bei Werkzeugmaschinen, finden regelmäßig Baugruppen Verwendung, mit Hilfe derer bewegte Maschinenteile oder Werkstücke spielfrei zu lagern und/oder zuzustellen sind. So enthält nahezu jede Werkzeugmaschine eine Haupt-oder Arbeitsspindel in Form einer Welle, die das Werkzeug und/oder das Werkstück trägt. Da die Lagerung einer solchen Spindel maßgeblich unter dem Einfluß der Bearbeitungskräfte steht und die Bearbeitungsgenauigkeit bestimmt, kommt ihr besondere Bedeutung zu. Es werden zum Spielausgleich vorgespannte Wälzlagerungen, z. B. Schräg- und Kegelrollenlager, oder auch reine Axiallager eingesetzt. Um nun bei diesen Lagern Laufruhe, Dauergenauigkeit und Steifigkeit zu gewährleisten, werden sie mit mechanischen Mitteln vorgespannt. Zu diesen Vorspannmitteln gehören starre Einstellelemente, wie z. B. Einstellscheiben, die unter Lagerdeckel gelegt werden, in der Tiefe verstellbare, zentrierte Lagerdeckel, Wellenmuttern und dergleichen. Daneben gibt es elastische Einstellmittel, wie z. B. vorgespannte Tellerfederpakete. All diese Mittel zur Erzeugung der Vorspannkraft werden bei der Montage der Maschine fest eingestellt und allenfalls erst wieder bei der Wartung oder Überholung verändert.

Neben den genannten Haupt- und Arbeitsspindeln gibt es Bewegungs- und Vorschubspindeln. Solche Spindeln tragen an ihrem Umfang ein Gewinde und werden auf einem Teilstück von einer Mutter umgriffen, die starr an den zu bewegenden Maschinenschlitten befestigt ist. Um nun einen solchen Schlitten möglichst präzise zu bewegen, ist dafür Sorge zu tragen, daß zwischen Gewinde der Mutter und Gewinde der Spindel klare Anlageverhältnisse vorliegen, die in besonders gelagerten Fällen aber durchaus auch ein bestimmtes, genau eingestelltes und aufrechtzuerhaltendes Spiel beinhalten können.

Zur Beeinflussung dieser Anlageverhältnisse verwendet man im allgemeinen quer- bzw. radialoder längsgeteilte bzw. achsparallel geteilte Muttern.

Bei den quergeteilten Muttern ist besonders die Doppelmutter bekannt, die aus zwei einzelnen Muttern besteht, die hintereinander angeordnet axial gegeneinander verspannt werden. Die hierzu notwendige axiale Vorspannung stellt der Hersteller der Mutter werkseitig ein. Dazu werden z. B. die beiden Muttern nebeneinander auf der Spindel gespannt positioniert, um in dieser Position mit einem Schrumpfring verbunden zu werden. Ein solcher Schrumpfring kann zum Nachstellen hydraulisch gelöst werden. Anstelle der Schrumpfring-Verbindung werden auch Paßfedern in Kombination mit anderen Bauteilen eingesetzt.

Bei den längsgeteilten Muttern hat man z. B. zwei Halbschalen, die mit in Umfangsrichtung wirkenden Spannvorrichtungen gegeneinander verspannt werden. Auch finden einteilige Muttern Verwendung, die nicht geteilt sind, sondern nur einseitig einen Längsschlitz aufweisen, der sich von Innen- zum Außendurchmesser radial erstreckt. Die Schlitzweite kann nun z. B. mittels einer Zugschraube variiert werden. Hierdurch ändert sich unter anderem der Innendurchmesser der Mutter, wodurch möglicherweise vorhandenes Spiel zwischen der Mutter und der Spindel ausgeglichen werden kann. Allerdings wird auch in diesem Fall die Spieleinstellung bzw. die Einstellung der Vorspannung nur bei der Montage oder Überholung der Maschine eingestellt.

Nachteilig bei der einmaligen axialen Vorspannung der Lager bzw. der Spindelmutter ist die Tatsache, daß sich diese Einstellung ausschließlich an einem Betriebspunkt der Lagerung bzw. der Spindelmutter orientiert. Dieser Betriebspunkt ist zudem an der Maximalbelastung der Maschine - innerhalb ihres Einsatzbereiches - orientiert, womit er also einer Extremsituation gerecht wird. So muß, z. B. bei einer Spindelmutter, die Vorspannung so eingestellt werden, daß die axiale Vorspannung innerhalb der Mutter oberhalb eines Mindestbetrages bleibt. Würde der Betriebspunkt für die Auslegung der Vorspannkraft in einen durchschnittlichen Belastungsbereich verlegt, so würde die Mutter bei hoher Belastung Umkehrspiel zeigen.

Die bekanntermaßen fest eingestellte hohe axiale Vorspannung ist also notwendig, um Dauergenauigkeit und hohe Steifigkeit des Systems zu garantieren. Mit zunehmender Vorspannung steigt allerdings auch die Reibleistung des Systems. Dies senkt nicht nur den mechanischen Wirkungsgrad, sondern führt auch zu Erwärmungen und den damit verbundenen Einflüssen auf die Genauigkeit der Einstellung des Systems sowie zu Verschleißerscheinungen, die die Lebensdauer des Systems erheblich herabsetzen. Dies gilt sowohl für die Lagerung als auch die Bewegungsspindeln.

Besonders störend ist die fest eingestellte axiale Vorspannung bei Eilgangbewegungen, die ja bei hohen Drehzahlen ablaufen. Denn hier entsteht durch die Kombination Vorspannung/hohe Drehzahl eine hohe Erwärmung, die den Verschleiß besonders fördert, gerade bei einer Betriebsart, bei der eine Vorspannung überhaupt nicht benötigt wird.

Aufgabe der vorliegenden Erfindung ist es daher, eine Vorrichtung anzugeben, durch die die Axialkomponente der Vorspannung von Wälzlagern und Spindelmuttern der vorbeschriebenen Art auch im Betrieb in Anpassung an die unterschiedlichen Betriebsbedingungen gegebenenfalls programmgesteuert einstellbar ist.

Diese Aufgabe wird erfindungsgemäß dadurch gelöst, daß die Vorrichtung ein Spannelement enthält, das aus scheibenförmigen Piezoelementen besteht, die mechanisch in Reihe angeordnet und elektrisch parallel geschaltet sind, und daß die Piezoelemente entsprechend der benötigten Axialkomponente elektrisch beaufschlagbar sind.

Ein derartiges Spannelement ist in der Lage, sich durch die Vergrößerung der Scheibendicke der einzelnen Piezoelemente im 1/1000-stel-mm-Bereich auszudehnen. Ein üblicher Wert ist hierbei 1 μm/100 Volt Spannungsbeaufschlagung. Dabei sind sie in der Lage in Abhängigkeit der Größe der scheibenförmigen Fläche der einzelnen Elemente große Kräfte zu übertragen. Eingebaut in den Kraftfluß von Axialabstützungen bei Wälzlagern und Spindelmuttern erzeugen sie bei Spannungsbeaufschlagung eine hohe axiale Vorspannung, wodurch die Steifigkeit und die Genauigkeit des Systems angehoben werden kann. Schließt man die scheibenförmigen Piezoelemente kurz, so wird deren vorherige Längenausdehnung rückgängig gemacht, wodurch die axiale Vorspannung der zuvor erwähnten Systeme verringert wird oder sogar Spiel entsteht. Dieses Absenken der Vorspannung oder Erzeugen des Spiels senkt die Reibleistung des Systems und erhöht somit den mechanischen Wirkungsgrad. Die Verminderung der Reibleistung führt zu einer geringeren Erwärmung im Wälzlager oder in der Spindelmutter, wodurch die Dauergenauigkeit und Lebensdauer der jeweiligen Systeme angehoben wird.

Aus Sicherheitstechnischen Gründen können die Spannelemente derart eingebaut bzw. beschaltet werden, daß bei Ruhezustand des Systems in den Wälzlagern bzw. den Spindelmuttern eine Mindest- oder Standardvorspannung gegeben ist, die es erlaubt, die Maschinen oder Geräte, in denen die Wälzlager oder Spindelmuttern eingesetzt sind, auch dann weiterzubenutzen, wenn das Vorspannsystem, z. B. durch Kabelbruch, ausfällt.

Übliche Werte für eine derartige Standardvorspannung liegen bei ca. 3 KN. Um nun die Vorspannung über die Standardvorspannung hinaus zu vergrößern, kann durch Anlegen von z. B. - 700 V eine Vorspannkraft von 10 KN erreicht werden. Um Vorspannkräfte unter dem Wert der Grundeinstellung zu erzeugen, kann man z. B. + 300 V anlegen, wodurch die Vorspannkraft gegen Null geht.

Mit der erfindungsgemäßen Vorrichtung ist man also in der Lage, je nach dem gewünschten Belastungsfall die Wälzlager oder die Spindelmutter in der Maschine während des Betriebes vorzuspannen oder zu entlasten.

So kann, z. B. für einen Bearbeitungsvorgang, der eine hohe Genauigkeit benötigt, eine Vorspannung angelegt werden, während in einer anderen Betriebsart, z. B. bei einer Eilgangbewegung zwischen den Bearbeitungsvorgängen oder einer beliebigen Bewegung während der Rüstphase, ohne Vorspannung gearbeitet wird.

In Weiterbildung der Erfindung zeichnet sich das Spannelement dadurch aus, daß es als ein eine Welle oder eine Spindel umfassender Kreisring ausgebildet ist. Dabei sind die einzelnen scheibenförmigen Piezoelemente in Richtung der Kreisringachse aufeinander geschichtet. Die Kreisringbauweise und die Schichtungsart haben den Vorteil, besonders raumsparend zu bauen. Schließlich sollen Sie auf geringstem Raum, wenn möglich in einer Spindelmutter oder direkt neben einem Wälzlager, untergebracht werden. Gerade für einen solchen Verwendungszweck ist die Ringform besonders geeignet.

Von Vorteil ist es, das Spannelement in Richtung der funktionsbedingten geometrischen Längenänderung beidseits durch je einen Deckring zu begrenzen. Dadurch können z. B. vorgefertigte Kreisringe aus Piezoelementen an die Abstützflächen der entsprechenden Wälzlagerringe angepaßt werden.

Desweiteren besteht die Möglichkeit, mindestens einen Deckring auf mindestens einer Fläche, von der eine Ausdehnungsrichtung wenigstens annähernd parallel zur Richtung der Längenänderung verläuft, mit einem Dehnmeßstreifen zu versehen.

· Da dieser Deckring im Kraftfluß der Axialabstützung angeordnet ist, wird er durch die anliegende Axialkraft gestaucht. Aus der Stauchung, die mit Dehnmeßstreifen erfaßt werden kann, und der Steifigkeit des Deckrings läßt sich die anliegende Axialkraft (Vorspannkraft) berechnen. In Weiterbildung der Erfindung verfügt also die Vorrichtung neben dem Spannelement auch über ein Meßglied. Beide sind über einen Regler gekoppelt. Dadurch kann die jeweilige Vorspannkraft genau erfaßt, eingestellt und geregelt werden, unabhängig von der Bearbeitungsgenauigkeit und dem Verschleiß des Systems. Das elektronisch aufgearbeitete Signal des Dehnmeßstreifens, das mit der Vorspannkraft eng verknüpft ist, kann einem Regler zugeführt werden. Der damit am Regler ankommende Istwert wird mit einem Sollwert, der per Hand oder über eine Maschinensteuerung vorgegeben ist, im Regler verglichen. Liegt der Istwert unter dem Sollwert, so wird die axiale Vorspannkraft durch eine Spannungserhöhung am Spannelement erhöht.

Da nun die Dehnmeßstreifen im Deckring nicht die reine axiale Vorspannkraft erfassen, sondern eine Überlagerung aus der äußeren durch die Maschine aufgebrachten Axiallast und der Vorspannung,die durch eine entsprechende Spannungsbeaufschlagung der Spannelemente erzeugt wird, ist es notwendig, die Größe der äußeren Axialkraft zu ermitteln, um sie von der Überlagerung zu subtrahieren. Zur Ermittlung der äußeren Axialkraft kann ein Längenmeßelement im Kraftfluß zwischen den vorgespannten Wälzlagern bzw. Spindelmuttern und den diese Teile tragenden Maschinenteilen angeordnet werden.

Auf diese Weise kann die Vorspannkraft exakt während des Betriebs den dortigen Erfordernissen angepaßt werden. Schwankungen der Vorspannkraft können somit über die Regelung kompensiert werden.

Der als Meßglied vorgesehene Deckring kann an vier Flächen mit Dehnmeßstreifen versehen sein, wobei die vier Flächen gleichförmig über den Umfang der Innenfläche des Deckrings angeordnet sind. Mehr als vier Flächen zur Aufnahme der Dehnmeßstreifen sind ebenfalls denkbar. Auch können diese Flächen, wenn es die Einbaubedingungen zulassen, am äußeren Umfang des Deckringes liegen. Die Flächen brauchen hierzu nicht unbedingt eben zu sein, sie können z. B. auch immakroskopischen Bereich zylinderisch gekrümmt sein.

Das zuvor genannte Längenmeßelement,mit dessen Hilfe die von außen auf das System wirkende Kraft errechnet werden kann, ist vergleichbar mit dem zuvor beschriebenen Deckring, der die Dehnmeßstreifen trägt.

Neben der zuvor beschriebenen Regelung, bei der die axiale Vorspannkraft unter Last nachgeregelt werden kann, gibt es eine weitere recht preiswerte Beschaltungsmöglichkeit. So kann vor der Belastung des Systems die Vorspannkraft des entsprechenden Wälzlagers oder der entsprechenden Spindelmutter eingestellt und ausgeregelt werden. Anhaltspunkte sind hierbei die zu erwartenden Belastungswerte, die aufgrund der Maschinen-und Bearbeitungswerte bekannt sind. Diese Voreinstellung und Vorausregelung hat den Vorteil, daß nur ein Meßsystem erforderlich ist. Allerdings kann man unter Last nicht nachregeln.

Eine weitere Möglichkeit,das erfindungsgemäße Spannelemente einzubauen, ergibt sich bei achsparallel geschlitzten Spindelmuttern, deren Axialspiel durch ein in Umfangsrichtung wirkendes Spannelement beeinflußt werden kann. Dazu wird das Spannelement, das ein quaderförmiges Paket aus scheibenförmigen Piezoelemten ist, zwischen den Stirnflächen des achsparallelen Schlitzes angeordnet und gegen diese abgestützt. Die einzelnen scheibenförmigen Piezoelemente des Paketes sind in Umfangsrichtung hintereinander angeordnet. Werden nun die Piezoelemente mit Spannung beaufschlagt, so verringert sich die axiale Vorspannung der Spindelmutter.

Die Funktion einer derartigen Spindelmutter beruht nun darauf, daß die Spindelmutter mit einem etwas zu geringen Innendurchmesser gefertigt wird. Damit hat sie auf der Spindel sitzend die maximale axiale und radiale Vorspannung. Erst das im Schlitz sitzende spannnungsbeaufschlagte Spannelement erzeugt bei Bedarf eine geringere Vorspannung oder auch Spiel durch seine in Umfangsrichtung erfolgende Längendehnung bei Spannungsbeaufschlagung. Da nun das sich ausdehnende Spannelement den Schlitz in der Spindelmutter winkelförmig weitet, werden die Piezoelemente durch die Rückstellkraft der Spindelmutter im Bereich des Innendurchmessers mit einer höheren Flächenpressung beaufschlagt als im Bereich des Außendurchmessers. Um dem entgegenzuwirken, wird das Paket aus Piezoelementen in seiner Wirkrichtung beidseitig durch je ein Stützelement begrenzt. Dabei ist jedes Stützelement um einen kleinen Winkel schwenkbar angeordnet, wobei die Schwenkachse parallel zur gedachten Mittellinie der Spindelmutter verläuft. Die Auflagefläche zwischen den Stützelementen und der Ausnehmung im Spalt der Spindelmutter können zylindermantelförmig sein.

Selbstverständlich kann das Paket aus Piezoelementen auch direkt in den Schlitz der Spindelmutter eingepaßt werden, wenn dafür Sorge getragen wird, daß durch das winkelförmige Öffnen des Schlitzes das Paket aus Piezoelementen nach radialaußen nicht abgedrängt werden kann und die einseitige Flächenpressung, die die Piezoelemente belastet, eine vorgegebenen Grenzwert nicht überschreiten kann.

Auch hier ist das Spannelement mit einem in Reihe geschalteten Längenmeßelement kombinierbar. Dabei ist das Längenmeßelement ein quaderförmiger Block, an dessen Außen- oder Innenfläche wenigstens ein Dehnmeßstreifen angeordnet ist. Der oder die Dehnmeßstreifen können auch an den Stirnflächen des quaderförmigen Blocks angeordnet sein, deren Ebenen annähernd senkrecht zur gedachten Mittellinie der Spindelmutter verlaufen.

Für das Zusammenspiel Spannelement, Längenmeßelement und Regler gilt auch hier das oben Gesagte.

Zusammenfassend kann man feststellen, daß die erfindungsgemäße Vorrichtung viele Vorteile auf sich vereinigt und das teilweise gleich mehrfach in einer Baugruppe. So kann z. B. bei einem Spindelantrieb (Kugelgewindetrieb, Rollengewindetrieb, Planetenrollengewindetrieb, usw.) die erfindungsgemäße Vorrichtung gleich zweimal eingesetzt werden, nämlich zur Vorspannung der Axiallagerung zum einen und zur axialen Vorspannung der von der Spindel bewegten Spindelmutter zum anderen.

Die Axiallagerung kann dabei z. B. so ausgebildet sein, daß mindestens eine Axialkomponente der Lagerung zum Wellenende hin orientiert ist. Bei dieser Anordnung kann nun das variable Spannelement als Stellglied in einem geschlossenen Regelkreis dafür sorgen, daß die Welle im Betrieb permanent axial auf Zug belastet wird. Dabei kann nun die axiale Vorspannung an die thermische Dehnung der Welle angepaßt werden. Das mit dem Spannelement verbundene Meßelement erkennt die durch die thermische Dehnung der Welle bedingte Verringerung der Axiallast. Ihr wird durch zusätzliche Spannungsbeaufschlagung des Spannelementes entgegengewirkt. Durch die damit verbundene Erhöhung der Axialkraft wird nicht nur die Lagergenauigkeit und -laufruhe erhöht, sondern auch gleichzeitig die Resonanzfrequenz der zwischen den Lagern eingespannten Spindeln. Denn die Vorspannung in Längsrichtung wirkt dämpfend.

Gleichzeitig wird die beispielsweise auf der Spindel sitzende Doppelmutter mit Hilfe des variablen Spannelements vorgespannt. Die axiale Vorspannung ermöglicht dabei innerhalb des Systems Mutter/Spindel einen höheren Traganteil. Es werden also mehr Wälzkörper als vorher am Tragen beteiligt.

Dadurch erhöht sich die statische und dynamische Steifigkeit des Systems, was wiederum die Genauigkeit positiv beeinflußt.

Wird nun keine hohe Genauigkeit gefordert, z. B. bei einer Rüst- oder Eilgangsbewegung, können die Vorgespannten Elemente durch Kurzschließen der einzelnen Piezobauteile entlastet werden. Dadurch verringert sich dort die Reibung erheblich, wodurch die damit verbundene Verlustwärme abnimmt. Dies führt wiederum zur Erhöhung des Wirkungsgrades, der Dauergenauigkeit und der Lebensdauer aller am Lagern und Bewegen beteiligten Systeme.

Weitere Merkmale und Einzelheiten der Erfindung ergeben sich aus der nachfolgenden Beschreibung der Ausführungsformen anhand der Zeichnungen. Die Zeichnungen zeigen im einzelnen:

Figur 1 Wälzlagerung mit Vorrichtung zur Einstellung der axialen Vorspannung;

Figur 2 Kugelgewindetrieb mit Doppelmutter und Vorrichtung zur Einstellung der axialen Vorspannung;

Figur 3 Stellelement mit integrierter Kraftmessung;

Figur 4 Regelkreis zur Bedienung der Vorrichtung zur Einstellung der axialen Vorspannung und

Figur 5 Geschlitzte Einzelmutter mit Vorrichtung zur Entlastung der axialen Vorspannung.

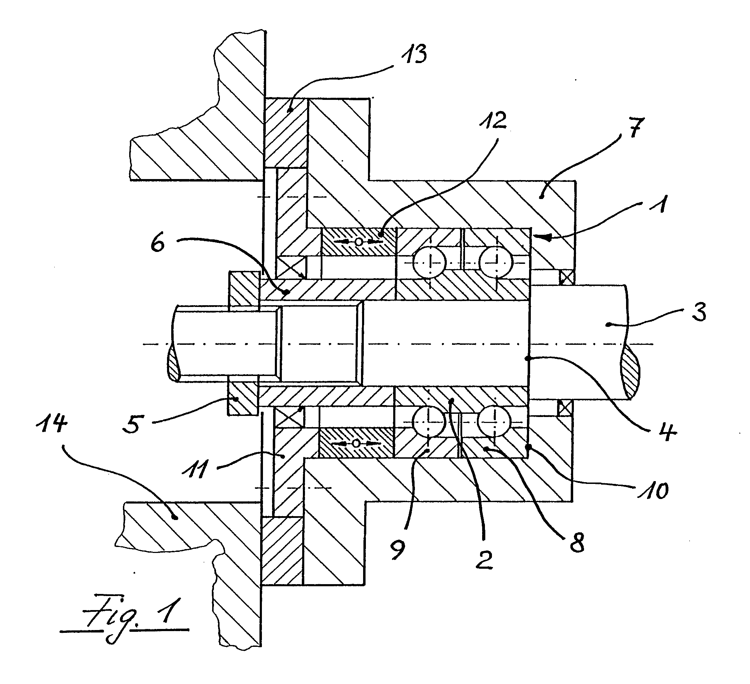

Figur 1 zeigt ein Festlager, über das ein Wellenteil in einem Gehäuse gelagert ist.

Das Primärteil des Festlagers ist ein doppelreihiges Schrägkugellager 1. Ein Innenring 2 dieses Lagers sitzt auf einem Wellenteil 3 einseitig gegen einen Wellenbund 4 angeschlagen. Gegen den Wellenbund wird der Innenring mittels einer Wellenmutter 5 und einer Hülse 6 gepreßt. Im Gehäuse 7 sitzt der geteilte Außenring des Schrägkugellagers 1, wobei dieser aus den Ringen 8 und 9 besteht. Der Ring 8 stützt sich an einem Wellenbund 10 ab. Der Ring 9 wird durch einen Lagerdeckel 11 und einen Vorspannungsregler 12 in seiner Lage gehalten. Der Lagerdeckel 11 ist dabei starr mit dem Gehäuse 7 verschraubt. Das Gehäuse 7 kann über ein Längenmeßelement 13 an dem die ganze Lagerung tragenden Maschinenteil 14 befestigt sein. Dabei dient das Längenmeßelement 13 der Erfassung der äußeren Kraft, die zwischen dem Gehäuse 7 und dem Maschinenteil 14 ansteht.

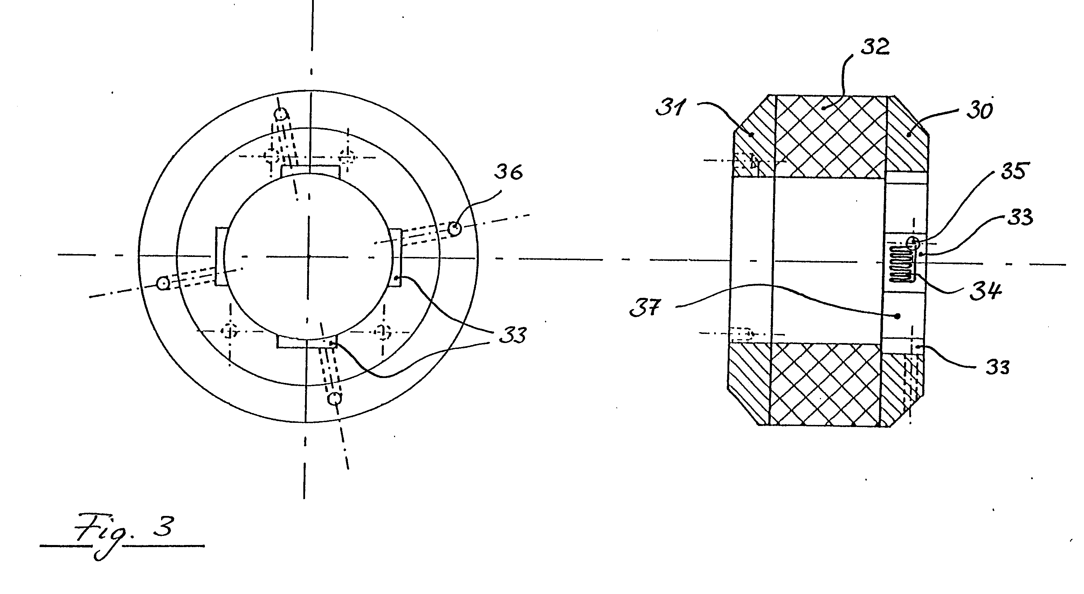

Figur 3 zeigt einen solchen Vorspannungsregler. Er besteht im wesentlichen aus zwei Deckscheiben 30, 31 und einem dazwischen liegenden kreisringförmigen Spannelement 32. Das Spannelement 32 wird aus einem Paket gebildet, das aus aufeinander geschichteten planen kreisringförmigen Piezoelementen besteht. Der Deckring 30 weist an seiner zentralen Bohrung 37 vier rechteckförmige Nuten 33 auf. Sie sind um jeweils 90 Winkelgrade zueinander versetzt. Jede der vier im Nutgrund befindlichen Planflächen dient zur Aufnahme eines Dehnmeßstreifens 34. Die einzelnen Dehnmeßstreifen sind dabei so orientiert, daß sie Längenänderungen, bedingt durch die Stauchung eines Deckrings unter Druck, optimal erfassen können. Die radialen Bohrungen 35 und die axialen Bohrungen 36 dienen der Zuführung der Meßleitungen.

Somit bildet der Vorspannungsregler ein Stellelement mit integrierter Kraftmessung. Eingebaut, z. B. in das Festlager aus Figur 1, ändert er durch Spannungsbeaufschlagung der Piezoelemente seine axiale Länge, wodurch die axiale Vorspannung auf das Schrägkugellager 1 übertragen wird. Die Vorspannung bewirkt hier bei eine Verringerung sowohl der axialen als auch der radialen Lagerluft. Im Vorspannungsregler selbst wird hierbei auch die Deckscheibe 30, aus Figur 3, die die Dehnmeßstreifen 34 trägt, gestaucht.

Die Stauchung bewirkt im Dehnmeßstreifen eine Widerstandsänderung, die in einer Auswerteelektronik weiterverarbeitet wird, um beispielsweise die axiale Vorspannung je nach Lastfall zu erhöhen oder zu mindern.

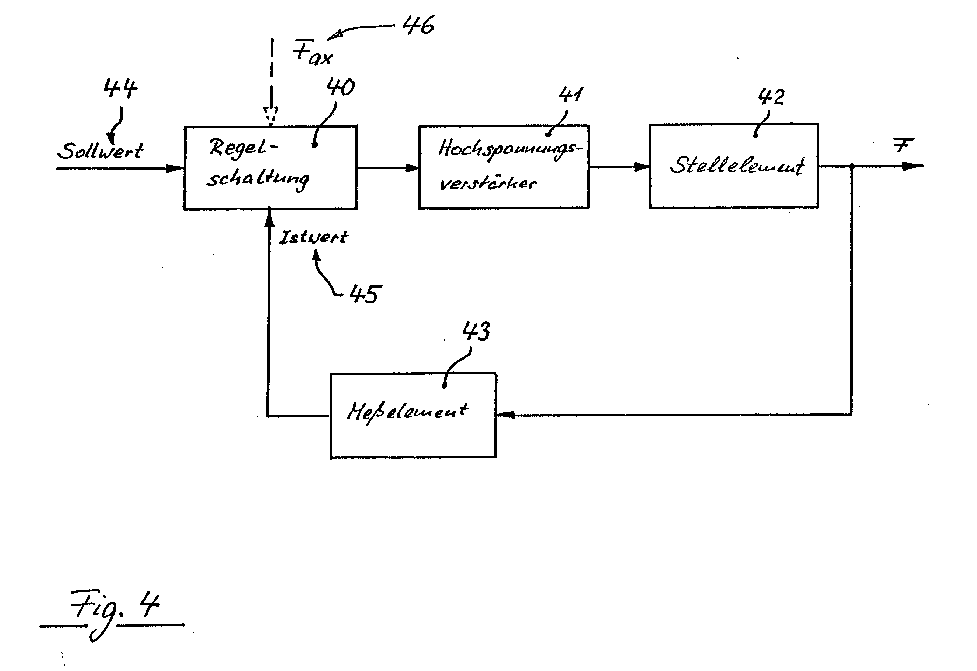

Figur 4 zeigt den hierfür notwendigen Regelkreis in einem vereinfachten Blockschaltbild. Der geschlossene Regelkreis besteht aus einer Regelschaltung 40, einem Hochspannungsverstärker 41, einem piezoelektrischen Stellelement 42, das vergleichbar ist mit dem Spannelement 32 aus Figur 3, und einem Meßelement 43, vergleichbar mit dem Deckring 30 aus Figur 3.

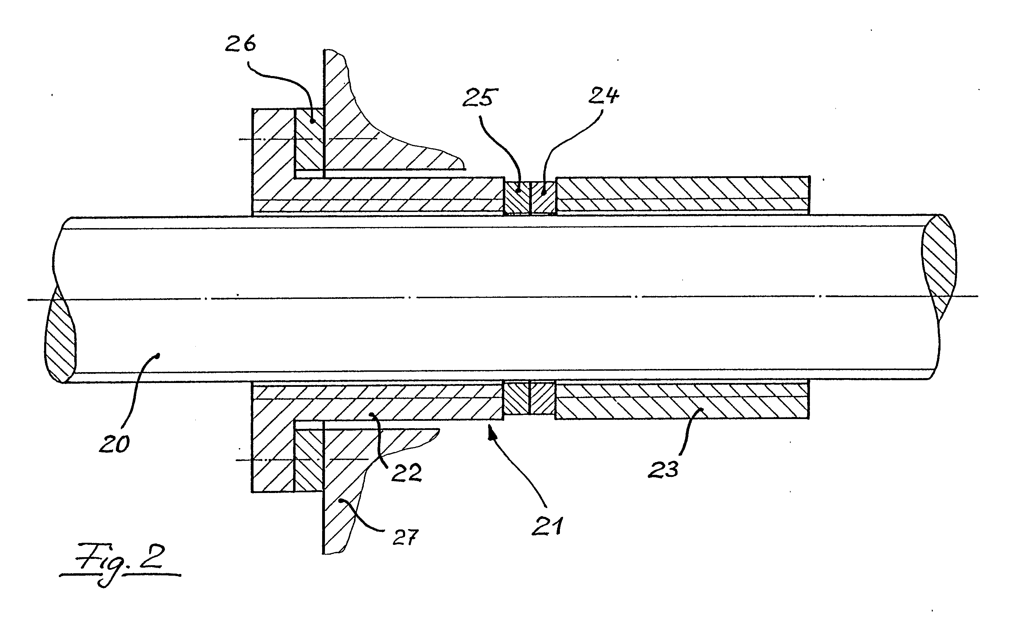

Wird nun der Regelschaltung eine axiale Vorspannkraft als Sollwert 44 vorgegeben, so vergleicht die Regelschaltung 40 diesen vorgegebenen Wert mit dem am Meßelement 43 gemessenen Istwert 45, der sich aus einer Überlagerung der von außen am System anliegenden Kraft (äußere Kraft) und der im Lager bzw. der Mutter vorhandenen Spannkraft errechnet. Gleichzeitig wird zur Bestimmung der reinen axialen Vorspannkraft die äußere Kraft $F_{ax}$ der Regelschaltung zugeführt. Sie wird z. B. mit Hilfe der Längenmeßelemente 13, 26 aus den Figuren 1 und 2 erfaßt. Liegt der Istwert unter dem Sollwert, so veranlaßt die Regelschaltung den Hochspannungsver stärker zu einer zusätzlichen Spannungsbeaufschlagung der Piezoelemente im Stellelement 42. Die damit verbundene Längenänderung im Kraftfluß wird durch das Meßelement 43 erkannt und der Regelschaltung 40 zurückgemeldet.

Der Sollwert 44 kann nun z. b. durch einen Rechner extern vorgegeben werden. Dadurch ergibt sich die Möglichkeit, den Sollwert 44 so zu varrieren, daß die axiale Vorspannung, z. B. in einem Axiallager, der Bearbeitungsaufgabe der Maschine, in der dieses Lager eingebaut ist, angepaßt wird. So kann beispielsweise für eine Eilgangbewegung die Vorspannung völlig zurückgenommen werden, um erst wieder kurz vor Einleitung der Brems- und Positionierbewegung zugeschaltet zu werden.

Man kann natürlich auch nur mit dem Meßelement, das in unmittelbarer Nähe des Stellelements angebracht ist, auskommen. Hier muß dann allerdings die axiale Vorspannkraft vor dem Aufbringen der äußeren Last eingestellt werden, denn unter Last ist eine Nachregelung nicht möglich, da das Meßelement neben dem Spannelement nicht nur die vom Spannelement aufgebrachte Vorspannkraft erfaßt sondern auch die axiale Komponente einer von außen auf das System wirkenden Kraft.

Figur 2 zeigt eine Doppelmutter 21 eines Kugelgewindetriebes mit einer Vorrichtung zur Erzeugung und Vermessung der axialen Vorspannung.

Auf einer Kugelgewindespindel 20 ist eine Doppelmutter angeordnet. Die Doppelmutter 21 besteht aus zwei eigenständigen Kugelgewindemuttern 22 und 23. Die Kugelgewindemutter 22 verfügt über einen Montageflansch, über den die Doppelmutter z. B. an einem zu bewegenden Maschinenschlitten befestigt wird. Zwischen beiden Kugelgewindemuttern sind ein Stellelement 24 und ein Meßelement 25 angeordnet. Das Stellelement 24 entspricht hierbei dem Spannelement 23 aus Figur 3, während das Meßelement 25 mit der Deckscheibe 30 (mit Dehnmeßstreifen 34), ebenfalls aus Figur 3, vergleichbar ist. Auch hier führt eine Spannungsbeaufschlagung des Stellelementes zu dessen Längenveränderung in axialer Richtung, wodurch die beiden Doppelmutterhälften 22 und 23 in axialer Richtung auseinandergedrückt werden. Dadurch werden beide Muttern gegeneinander verspannt, womit sich die Steifigkeit der Kombination Kugelgewindespindel/Doppelmutter erhöht. Die Größe der axialen Vorspannung wird mit Hilfe des Meßelementes 25 erfaßt.

Die Doppelmutter 21 kann über ein Längenmeßelement 26 an dem die Doppelmutter tragenden Maschinenteil 27 befestigt sein. Auch hier dient das Längenmeßelement 26 der Erfassung der äußeren Kraft, die zwischen der Doppelmutter 21 und dem Maschinenteil 27 ansteht.

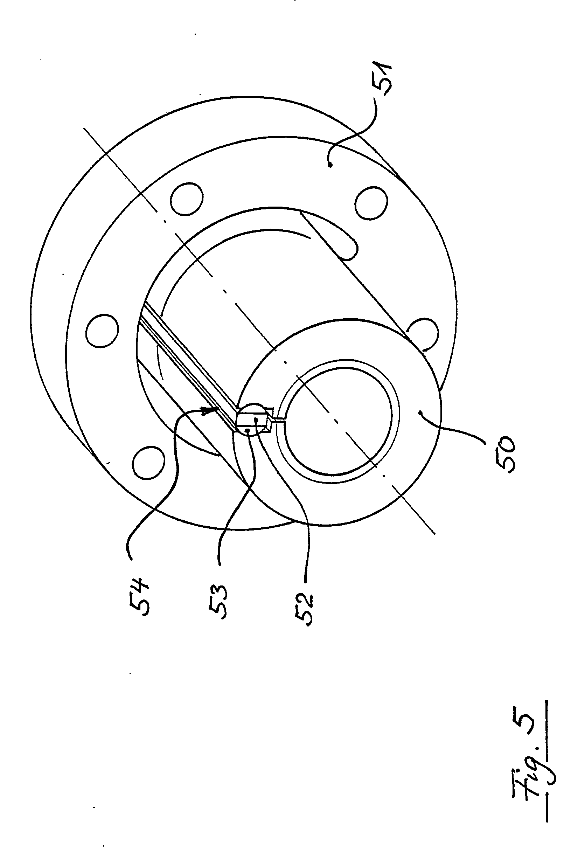

Figur 5 zeigt eine geschlitzte Einzelmutter mit einer Vorrichtung zur Entlastung der axialen Vorspannung. Die Einzelmutter setzt sich dabei aus einem Kugelmutterkörper 50, einem Montageflansch 51 und einem quaderförmigen Spannelement 52 mit seinen Lagerschalen 53 zusammen. Der Kugelmutterkörper 50 mit seinem innen liegenden Kugelgewinde ist nun so gefertigt, daß er auf die Kugelgewindespindel gesetzt ein "negatives" Spiel aufweist. Das heißt, er ist von Hause aus auf maximale axiale und radiale Vorspannung eingestellt. Diese radiale Vorspannung kann nun durch das spielfrei in einen Spalt 54 eingesetzte, quaderförmige Spannelement, das sich beidseits über die Druckschalen 53 im Spalt abstützt, aufgeweitet werden. Diese Aufweitung erfolgt durch eine in Umfangsrichtung des Kugelmutterkörpers 50 wirkende Längendehnung des Spannelements bei Spannungsbeaufschlagung. Die damit verbundene Aufweitung des Kugelmutterkörpers 50 läßt Spiel zwischen der eingesetzten Kugelgewindespindel mit Kugeln (hier nicht dargestellt) und der Kugelgewindemutter entstehen.

Diese einfach aufgebaute und billig herzustellende Einzelmutter ist besonders für den Einsatzfall gedacht, bei dem im allgemeinen weitgehend gleiche axiale Belastungen vorliegen. Für diesen Betriebspunkt wird die Vorspannung fertigungstechnisch festgelegt. Für den Eilgang innerhalb der Maschine wird dann die Mutter über das Spannelement von der Vorspannung befreit, wodurch die Mutter mit etwas Spiel leichtgängig bewegbar wird. Somit kann man gerade im Eilgang unnötigen Verschleiß aufgrund einer Herabsetzung der reibungsbedingten Erwärmung vermeiden.

**Ansprüche**

1. Vorrichtung zur Einstellung der Axialkomponente für die spielfreie Vorspannung von Wälzlagern oder Spindelmuttern, wobei die Vorrichtung ein im Kraftfluß der Axialabstützung angeordnetes, hinsichtlich seiner Stellgröße variables Spannelement enthält,
dadurch gekennzeichnet,
daß das Spannelement (12, 24, 32, 52) aus scheibenförmigen Piezoelementen besteht, die mechanisch in Reihe angeordnet und elektrisch parallel geschaltet sind, und daß die Piezoelemente entsprechend der benötigten Axialkomponente elektrisch beaufschlagbar sind.

2. Vorrichtung nach Anspruch 1,
dadurch gekennzeichnet,
daß das Spannelement (12, 24, 32) als ein eine Welle oder die Spindel umfassender Kreisring ausgebildet ist.

3. Vorrichtung nach Anspruch 1 und 2,
dadurch gekennzeichnet,
daß die einzelnen scheibenförmigen Piezoelemente in Richtung der Kreisringachse aufeinander geschichtet sind.

4. Vorrichtung nach Anspruch 1,
dadurch gekennzeichnet,
daß das Spannelement (32) in Richtung der funktionsbedingten geometrischen Längenänderung beidseits durch je ein Deckring (30, 31) begrenzt ist.

5. Vorrichtung nach Anspruch 4,
dadurch gekennzeichnet,
daß mindestens ein Deckring (30) auf mindestens einer Fläche, von der eine Ausdehnungsrichtung wenigstens annähernd parallel zur Richtung der Längenänderung verläuft, einen Dehnmeßstreifen (34) aufweist.

6. Vorrichtung nach Anspruch 5,
dadurch gekennzeichnet,
daß der Deckring (30) vier derartige Flächen mit Dehnmeßstreifen (34) aufweist.

7. Vorrichtung nach Anspruch 6,
dadurch gekennzeichnet,
daß die vier Flächen gleichförmig über den Umfang der Innenfläche (37) des Deckrings (30) verteilt angeordnet sind.

8. Vorrichtung nach einem der vorhergehenden Ansprüche,
dadurch gekennzeichnet,
daß das Spannelement (24, 32) das Stellglied (42) und der bzw. die Dehnmeßstreifen (34) das Meßglied (43) eines geschlossenen Regelkreises sind.

9. Vorrichtung nach Anspruch 1, wobei das Axialspiel einer achsparallel geschlitzten Spindelmutter durch ein in Umfangsrichtung derselben wirkendes Spannelement beeinflußbar ist,
dadurch gekennzeichnet,
daß das Spannelement (52) ein quaderförmiges Paket aus scheibenförmigen Piezoelementen ist, das zwischen den Stirnflächen des Schlitzes (54) angeordnet und gegen diese abgestützt ist.

10. Vorrichtung nach Anspruch 9,
dadurch gekennzeichnet,
daß die einzelnen scheibenförmigen Piezoelemente des Pakets in Umfangrichtung hintereinander angeordnet sind.

11. Vorrichtung nach einem der vorhergehenden Ansprüche,
dadurch gekennzeichnet,
daß das Spannelement mit einem in Reihe geschalteten Längenmeßelement kombiniert wird.

12. Vorrichtung nach Anspruch 11,
dadurch gekennzeichnet,
daß das Längenmeßelement ein quaderförmiger Block ist, an dessen Außen- oder Innenflächen wenigstens ein Dehnmeßstreifen angeordnet ist.

13. Vorrichtung nach Anspruch 9 und 10,
dadurch gekennzeichnet,
daß die axiale Vorspannung der Spindelmutter (50, 51) mit Spannungsbeaufschlagung der Piezoelemente verringerbar ist.

14. Vorrichtung nach Anspruch 9 und 10,
dadurch gekennzeichnet,
daß das Paket aus Piezoelementen in seiner Wirkrichtung beidseitig durch je ein Stützelement (53) begrenzt ist.

15. Vorrichtung nach Anspruch 9 und 14,
dadurch gekennzeichnet,
daß jedes Stützelement (53) um einen kleinen Winkel schwenkbar im Kugelmutterkörper (50) angeordnet ist, wobei die Schwenkachse parallel zur gedachten Mittellinie der Spindelmutter verläuft.

16. Vorrichtung nach einem der vorhergehenden Ansprüche,
dadurch gekennzeichnet,
daß ein Längenmeßelement (13, 26) im Kraftfluß zwischen den vorgespannten Wälzlagern bzw. Spindelmuttern und den diese Teile tragenden Maschinenteilen angeordnet ist.

*Fig. 1*

EP 0 377 145 A2

*Fig. 2*

EP 0 377 145 A2

Fig. 3

$F_{ax}$  46

44

Sollwert

| Regel-schaltung | 40 | Hochspannungs-verstärker | 41 | Stellelement | 42 |

$F$

Istwert

45

| Meßelement | 43 |

Fig. 4

EP 0 377 145 A2

*Fig. 5*

EP 0 377 145 A2